# EUROPEAN PATENT SPECIFICATION

(11) **EP 3 387 080 B1**
(45) Date of publication and mention of the grant of the patent: **12.05.2021**
(21) Application number: 15910048.6
(22) Date of filing: 10.12.2015
(51) Int. Cl.: C09D 175/04, C08G 71/04, C09J 175/04, C08K 5/138

(54) **CROSSLINKABLE COMPOSITION AND COATING MADE THEREFROM**
VERNETZBARE ZUSAMMENSETZUNG UND DARAUS HERGESTELLTE BESCHICHTUNG
COMPOSITION RÉTICULABLE ET REVÊTEMENT FABRIQUÉ À PARTIR DE CELLE-CI

(43) Date of publication of application: 17.10.2018
(73) Proprietor: Dow Global Technologies LLC, Midland, MI 48674 (US)
(72) Inventor: XU, Yawei, Shanghai 201203 (CN); ARGYROPOULOS, John, Midland, MI 48674 (US); ZOU, Jian, Shanghai 201203 (CN); ORTIZ, Rebecca, Midland, MI 48674 (US)
(74) Representative: Murgitroyd & Company
(86) International application number: PCT/CN2015/096956
(87) International publication number: WO 2017/096573

(56) References cited:
- EP-A1- 2 949 687
- EP-A2- 0 274 200
- WO-A1-85/01694
- WO-A1-85/01695
- WO-A1-97/18264
- WO-A1-98/16327
- WO-A1-2007/140940
- WO-A1-2015/023905
- WO-A2-99/24517
- WO-A2-2006/055207
- CN-A- 1 796 439
- CN-A- 102 432 872
- CN-A- 103 865 059
- US-A- 4 007 144
- US-A- 4 154 891
- US-A1- 2012 240 973
- US-A1- 2015 159 041
- US-A1- 2015 344 699

## Description

### FIELD OF THE INVENTION

The present invention relates to a crosslinkable composition and a coating made therefrom.

### INTRODUCTION

The use of polyurethane paints derived from isocyanates in coating applications is generally known. Due to the use of isocyanates, polyurethane paints derived from isocyanates have more environmental and health concerns than isocyanate-free polyurethane coatings.

Attempts have been made to provide isocyanate-free polyurethane coatings, for example, US2011/0313091A1 provides an ambient cure, two component isocyanate-free polyurethane coatings based on coating compositions comprising the reaction of polycarbamates and polyaldehydes. While such coating compositions have the ability to decouple pot life from cure speed, which allows for the development of formulations with longer pot life and provides coatings with dry fast and quick hardness development, the coatings still have room for improvement in their odor. Addition of commonly used odor masking agents is not desirable as these odor masking agents may bring additional odor (like perfume or fruit) to the coatings.

WO8501694A1 and WO8501695A1 disclose flexible coating compositions which have excellent adherence to metal and plastic substrates and possess superior weathering properties.

US2012240973A1 discloses backsheets and coating compositions for forming such which are useful in photovoltaic modules.

US4007144A discloses a thermosetting powder coating composition comprising a low molecular weight cellulose acetate butyrate as the major component, an aminoplast crosslinking agent, a latent acid crosslinking catalyst, and certain poly(alkylene glycols).

EP0274200A2 discloses a polyolefin stabilized against oxidative degradation by the presence therein of a stabilizing amount of an antioxidant composition which comprises: a) at least one aralkyl-substituted diarylamine; and, b) at least one sterically hindered phosphite.

US4154891A discloses novel thermosetting resinous compositions.

WO2006055207A2 relates to a durable layer composition for in-mold decoration.

WO9924517A2 A coating comprising the silated reaction product of R¹(OH)ₘ and OCN(CH₂)tSiR⁴(OR⁵)₂ and/or R²-(SiYX₂)ₙ; a graft copolymer having an acrylic polymer based backbone and stabilizing arms comprising ethylenically unsaturated monomer, the backbone being insoluble and the arms being soluble in the composition; a melamine crosslinker; and an acrylic polyol; m, n, t, R¹, R², R⁴, R⁵, X and Y defined in the text.

WO9816327A1 provides a method for painting a substrate which comprises: a) priming the substrate with a primer selected from the group consisting of epoxy resin primers and polyester resin primers; b) applying to the primed substrate a crosslinkable basecoat composition comprising from 10 to 90 percent by weight of an epoxidized monohydroxylated polydiene polymer, from 8 to 60 percent by weight of an amino resin crosslinking agent, and from 2 to 40 percent by weight of a reinforcing agent; and c) applying over the basecoat a clearcoat selected from the group consisting of epoxidized monohydroxylated polydiene-based clearcoats, polyester clearcoats, and acrylic clearcoats.

WO9718264A1 discloses a crosslinkable phase-stable composition, in particular for coating primed and unprimed substrates comprising from 10 to 80 percent by weight of a hydroxy functional polydiene polymer having a functionality of at least 1.3, 8 to 60 percent by weight of an amino resin crosslinking agent, and 2 to 40 percent by weight of a reinforcing agent.

Therefore, it is desirable to provide a composition that does not require the use of isocyanates, preferably cures at ambient conditions, and is capable of providing coatings with reduced odor.

### SUMMARY OF THE INVENTION

The present invention provides a novel crosslinkable composition that provides a coating made therefrom with reduced odor, compared to a conventional crosslinkable composition comprising the same components as the crosslinkable composition of the present invention except no hindered phenol having a molecular weight of 300 or more. The crosslinkable composition of the present invention also demonstrates comparable drying speed and provides comparable hardness compared to the conventional crosslinkable composition.

In a first aspect, the present invention is a crosslinkable composition comprising:
(a) a polyol, a polycarbamate, or mixtures thereof; having an average of 2 or more functional groups;
(b) a polyaldehyde, an acetal or hemiacetal of the polyaldehyde, or mixtures thereof;
(c) an acid catalyst having a pKa of less than 6.0;
(d) a hindered phenol having a molecular weight of 300 or more; and
(e) optionally an organic solvent.

In a second aspect, the present invention is a crosslinkable composition comprising:
(a) a polycarbamate having an average of 2 or more functional groups;
(b) a polyaldehyde, an acetal or hemiacetal of the polyaldehyde, or mixtures thereof;
(c) an acid catalyst having a pKa of less than 6.0;
(d) a hindered phenol having a molecular weight of 300 or more; and
(e) optionally an organic solvent.

In a third aspect, the present invention is a coating comprising the crosslinked composition of the first or second aspect.

In a fourth aspect, the present invention is a process for producing a coating. The process comprises:
(i) providing a crosslinkable composition of the first or second aspect, and
(ii) curing the crosslinkable composition to form the coating.

In a fifth aspect, the present invention is a method of reducing the odor of a coating. The method comprises:
(1) adding a hindered phenol having a molecular weight of 300 or more to a mixture of (a) a polyol, a polycarbamate, or mixtures thereof; having an average functional groups of 2 or more; (b) a polyaldehyde, an acetal or hemiacetal of the polyaldehyde or mixtures thereof; (c) an acid catalyst having a pKa of less than 6.0; and (e) optionally an organic solvent; thus to form a crosslinkable composition; and
(2) curing the crosslinkable composition to form the coating.

### DETAILED DESCRIPTION OF THE INVENTION

As used herein, the term "polyaldehyde" means a molecule containing two or more aldehyde groups or their hydrates, or their acetals or hemiacetals, wherein the molecule is capable of performing as described herein and is capable of reacting with a polycarbamate or a polyol during curing so as to form a crosslinked composition, that is, a crosslinked polyurethane. The aldehyde group can be written herein as -C(=O)H or -CHO.

As used herein, the term "ambient temperature curable" means capable of reacting in a chemically transforming process at from 0°C to less than 80°C.

The term "carbamate group" means a radical structure of formula:

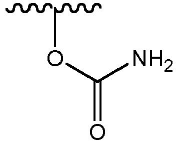

As used herein, the term "polycarbamate" means a molecule containing two or more carbamate groups (H₂NC(O)O-), wherein the molecule is capable of reacting with the polyaldehyde, an acetal or hemiacetal of the polyaldehyde so as to form the crosslinked composition of the present invention.

As used herein, the term "polyol" means an organic molecule having at least 2 -OH functionalities.

The crosslinkable composition of the present invention may comprise, component (a), one or more polyols, one or more polycarbamates, or mixtures thereof.

In some embodiments, the crosslinkable composition of the present invention comprises one or more polyols. The polyol useful as the component (a) of the crosslinkable composition can be an acrylic, styrene-acrylic, styrene butadiene, saturated polyester, urethane, alkyd, polyether or polycarbonate. The polyol may have an average of 2 or more hydroxyl groups, or an average of 3 or more hydroxyl groups, or an average of 4 or more hydroxyl groups. As used herein, the term "average number of hydroxyl groups" means the total number average molecular weight of the polyol as determined by gel permeation chromatography divided by the hydroxyl equivalent weight of the polyol, i.e. 56,100 mg KOH/mole KOH divided by the hydroxyl number in mg KOH/g resin.

The polyol useful as the component (a) of the crosslinkable composition can be acyclic, straight or branched; cyclic and nonaromatic; cyclic and aromatic, or a combination thereof. The polyol preferably comprises one or more acyclic, straight or branched polyols. For example, the polyol may consist essentially of one or more acyclic, straight or branched polyols. Preferably the polyol consists essentially of carbon, hydrogen, and oxygen atoms. More preferably the polyol consists of primary hydroxyl groups and most preferably the hydroxyl groups are in the 1,2 and/or 1,3 configuration.

In some other embodiments, the crosslinkable composition of the present invention comprises one or more polycarbamates. The polycarbamate useful as the component (a) of the crosslinkable composition may have an average of 2 or more carbamate groups, an average of 2.5 or more carbamate groups, or an average of 3 or more carbamate groups, or an average of 4 or more carbamate groups. As used herein, the term "average number of carbamate groups" assumes full conversion of the polyol or (poly)isocyanate used to form the polycarbamate and means the total number average molecular weight of the polycarbamate as determined by gel permeation chromatography (GPC) divided by the number of hydroxyl groups in the polyol used to make the carbamate or the number of isocyanate groups in the (poly) isocyanate used to make the carbamate, whichever is used. In the case of an alkyd, the number of hydroxyl groups equals the number average molecular weight of the alkyd as determined by GPC divided by the hydroxyl equivalent weight of the alkyd, i.e. 56,100 mg KOH/mole KOH divided by the hydroxyl number in mg KOH/g resin. Further, the number average molecular weight of the polycarbamate can be determined by GPC of the polyol or polyisocyanate followed by including in the added weight from reaction with urea or alkylcarbamate to make the polycarbamate.

The polycarbamate useful in the present invention can be an acrylic, styrene-acrylic, styrene-butadiene, saturated polyester, urethane, alkyd, polyether or polycarbonate.

The polycarbamate useful in the present invention can be acyclic, straight or branched; cyclic and nonaromatic; cyclic and aromatic, or a combination thereof The polycarbamate may comprise one or more acyclic, straight or branched polycarbamates. For example, the polycarbamate may consist essentially of one or more acyclic, straight or branched polycarbamates. Preferably the polycarbamate consists essentially of, and more preferably consists of carbon, hydrogen, nitrogen, and oxygen atoms. Typically the polycarbamate is prepared by (a) reacting a polyol with O-methyl carbamate or urea to give the polycarbamate; (b) reacting a polyisocyanate with an O-hydroxy(C₂-C₂₀)alkyl-carbamate to give the polycarbamate; or (c) reacting the O-hydroxy(C₂-C₂₀) alkyl-carbamate with methacrylic anhydride to give a 2-carbamoylalkyl methacrylate, and then polymerizing the 2-carbamoylalkyl methacrylate with an acrylic acid monomer to give the polycarbamate as a polyacrylic-based polycarbamate. The polycarbamates produced in (a) to (c) typically will have different structures.

Preferably, each of the one or more acyclic, straight or branched polycarbamates is prepared by reacting one or more polyols with an unsubstituted carbamic acid alkyl ester or urea to yield the one or more acyclic, straight or branched polycarbamates. Suitable polyols useful for preparing the polycarbamate may be acrylic polyols such as a methacrylic or acrylic polyol, polyalkylene polyols, polyether polyols (e.g., a poly(oxyalkylene) such as a poly(oxyethylene), such as a poly(ethylene glycol), polyester polyols, alkyd polyols, or polycarbonate polyols. Preferably, the polyalkylene polyol is a polyalkylene glycol. Preferably the polyalkyllene glycol is a polyethylene glycol or polypropylene glycol.

Preferably, the polycarbamate is an acrylic polycarbamate. The acrylic polycarbamate may be prepared by reacting the hydroxyl groups of an acrylic polyol with an unsubstituted carbamic acid alkyl ester (such as methyl carbamate) or urea in the presence of a catalyst at elevated temperatures using a transesterification procedure that is known by one skilled in the art. In one preferred embodiment, at least 40%, at least 60%, or at least 80%, of the hydroxyl groups in the acrylic polyol are converted to carbamate groups. The acrylic polyols are well known in the art and can be prepared from polymerizing a hydroxyl-functional (meth)acrylate such as 2-hydroxyethyl(meth)acrylate with other (meth)acrylic monomers, such as methyl methacrylate, acrylic acid, butyl acrylate. The polymerization can be performed using a variety of processes (such as solution polymerization) that are known by one skilled in the art. The acrylic polycarbamate useful in the present invention can also be prepared by polymerizing a carbamoylalkyl (meth)acrylate with other acrylic monomers as well as other co-monomers including, for example, other olefinic monomers such as styrene, acrylonitrile. These other acrylic monomers may include, for example, acrylic acid, (C₁-C₂₀)alkylacrylic acid such as methacrylic acid), and (C₁-C₂₀)alkyl acrylate such as methyl acrylate. Examples of preferred acrylic monomers useful in preparing the polycarbamates include methyl methacrylate, acrylic acid, butyl acrylate.

The acrylic polycarbamate useful in the present invention may have a molecular weight in the range of from 1,000 to 100,000, or in the range of from 1,500 to 10,000. As used herein, molecular weight refers to the number average molecular weight, which may be determined by GPC using a polystyrene standard. The carbamate functionality of the acrylic polycarbamate can be at least 2, at least 3, or at least 4.

In one embodiment, the acrylic polycarbamate can be produced via batch process or continuous process. In one embodiment, one or more acrylic polycarbamates are utilized, which are optionally dissolved in a solvent, e. g. organic solvent, or in the alternative, melted via heat.

In one embodiment, the acrylic polycarbamate has carbamate groups and hydroxyl groups in a ratio of the equivalents of carbamate groups to the number of equivalents of hydroxyl functional groups of from 1:1 to 20:1 or from 5.5:4.5 to 10:1.

In some other embodiments, the polycarbamate comprises an alkyd polycarbamate. The alkyd polycarbamate may be prepared by reacting the hydroxyl groups of an alkyd polyol with an unsubstituted carbamic acid alkyl ester (such as methyl carbamate) or urea in the presence of a catalyst at elevated temperatures using a transesterification procedure that is known by one skilled in the art. In one preferred embodiment, at least 30%, at least 40%, or at least 60%, of the hydroxyl groups in the alkyd polyol are converted to carbamate groups.

Alkyd polyols are polyesters of polyhydroxyl alcohols and polycarboxylic acids chemically combined with various drying and semi-drying oils and/or their respective fatty acids in different proportions. Polyhydroxyl alcohols may include, for example, such components as ethylene glycol, diethylene glycol, neopentyl glycol, 1,4-butanediol, 1,6-hexanediol, glycerol, pentaerythritol, sorbitol and mannitol. Suitable polyhydroxyl alcohols thus include ethylene glycol, propylene glycol, diethylene glycol, triethylene glycol, tetraethylene glycol, pentaethylene glycol, hexaethylene glycol, heptaethylene glycol, octaethylene glycol, nonaethylene glycol, decaethylene glycol, neopentyl glycol, glycerol, 1,3-propanediol, 2,4-dimethyl-2-ethyl-hexane-1,3-diol, 2,2-dimethyl-1,2-propanediol, 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 2,2,4-tetramethyl-1,6-hexanediol, thiodiethanol, 1,2-cyclohexanedimethanol, 1,3-cyclohexanedimethanol, 1,4-cyclohexanedimethanol, 2,2,4-trimethyl-1,3-pentanediol, 2,2,4-tetramethyl-1,3-cyclobutanediol, p-xylenediol, hydroxypivalyl hydroxypivalate, 1,10-decanediol, hydrogenated bisphenol A, trimethylolpropane, trimethylolethane, pentaerythritol, erythritol, threitol, dipentaerythritol, sorbitol, mannitol, glycerine, dimethylolpropionic acid.

Polycarboxylic acids useful in the present invention may include, for example, phthalic anhydride or acid, maleic anhydride or acid, fumaric acid, isophthalic acid, succinic anhydride or acid, adipic acid, azeleic acid, and sebacic acid, terephthalic acid, tetrachlorophthalic anhydride, tetrahydrophthalic anhydride, dodecanedioic acid, sebacic acid, azelaic acid, 1,4-cyclohexanedicarboxylic acid, 1,3-cyclohexanedicarboxylic acid, 2,6-naphthalenedicarboxylic acid, glutaric acid, trimellitic anhydride or acid, citric acid, pyromellitic dianhydride or acid, trimesic acid, sodium sulfoisophthalic acid, as well as from anhydrides of such acids, and esters thereof, where they exist. Optionally monocarboxylic acids may be employed including, for example, benzoic acid. The reaction mixture for producing alkyds includes one or more aliphatic or aromatic polycarboxylic acids, esterified polymerization products thereof, and combinations thereof. As used herein, the term "polycarboxylic acid" includes both polycarboxylic acids and anhydrides thereof.

Drying oils useful in the present invention may include, for example, coconut oil, fish oil, linseed oil, tung oil, castor oil, corn oil, rapeseed oil, palm oil, palm kernel oil, tallow, cottonseed oil, safflower oil, sunflower oil, soybean oil, and tall oil.

In addition to an amount of polyhydroxyl alcohols reacted with a fatty acid (C12 or higher carboxylic acid), an ester of a fatty acid, or naturally occurring-partially saponified oil, a prescribed amount of a higher functional polyhydroxyl compound may be selected from trimethylolethane, trimethylolpropane, pentaerythritol, erythritol, threitol, dipentaerythritol, and sorbitol.

Alkyd polyols may further include any one or more modifications, for example, alkyd may be urethane modified, acrylic modified, styrene modified, vinyl ester modified, vinyl ether modified, silicone modified, epoxy modified, combinations thereof.

The polycarbamate useful in the present invention, preferably the acrylic polycarbamate, may have a glass transition (T_{g}) of from 0°C to 80°C, from 10°C to 70°C, or from 20°C to 65°C. The T_{g} of the polycarbamate may be determined by a variety of methods such as differential scanning calorimetry (DSC).

Preferably, the polycarbamate useful in the present invention is substantially isocyanate free. Presence or absence of molecules containing isocyanate groups can be readily determined by Fourier Transform Infrared (FT-IR) spectroscopy or carbon-13 nuclear magnetic resonance (¹³C-NMR) spectroscopy. "Substantially isocyanate-free" means that the crosslinkable composition contains less than 3 mol %, more preferably less than 1 mol %, and still more preferably less than 0.1 mol % of isocyanate groups, based on the total moles of carbamate groups plus isocyanate groups in the crosslinkable composition. Where an isocyanate group-containing reactant is employed, the polycarbamate prepared therefrom is titrated or "quenched" by an isocyanate quenching agent to convert any residual isocyanate groups to carbamates or amines. Examples of compounds that could be used as an isocyanate quenching agent are water, sodium hydroxide, methanol, sodium methoxide, and a polyol.

The polycarbamate useful in the present invention may be present, by weight based on the total dry weight of the crosslinkable composition, in an amount of 40% or more, 50% or more, or even 60% or more, and at the same time, 95% or less, 90% or less, or even 85% or less. In one embodiment, the crosslinkable composition comprises a mixture of the polyol and the polycarbamate as the component (a). The dosage of each component in the component (a) is as described above and the combined amount of the component (a) in the crosslinkable composition may be up to 95% by weight based on the total dry weight of the crosslinkable composition.

The crosslinkable composition of the present invention may comprise, component (b), one or more polyaldehydes, acetals or hemiacetals of the polyaldehydes, or mixtures thereof.

In some embodiments, the crosslinkable composition comprises one or more polyaldehydes, or acetals or hemiacetals of the polyaldehydes, or mixtures thereof. The polyaldehydes useful in the present invention may have 2 or more, 3 or more, or even 4 or more aldehyde groups. The polyaldehyde can comprise from 2 to 20 carbon atoms. The polyaldehyde can also comprise greater than 20 carbon atoms, i.e., up to 100 carbon atoms, with the proviso that a polyaldehyde having more than 20 carbon atoms has at least one aldehyde group for every 10 carbon atoms. The polyaldehyde useful in the present invention can be a cyclic, straight or branched polyaldehyde, cyclic and non-aromatic; cyclic and aromatic; or a combination thereof. The polyaldehyde may comprise one or more cyclic, non-aromatic polyaldehydes or one or more aromatic polyaldehydes. For example, the polyaldehyde can comprise one or more cyclic, non-aromatic polyaldehydes having from 3 to 20 ring carbon atoms. The cyclic, non-aromatic polyaldehyde may have from 5 to 12 ring carbon atoms.

Examples of suitable cyclic polyaldehydes are trans-1,3-cyclohexanedicarboxaldehyde; cis-1,3 -cyclohexanedicarboxaldehyde; trans-1,4-cyclohexanedicarboxaldehyde; cis-1,4-cyclohexanedicarboxaldehyde; a mixture of 1,3-cyclohexanedicarboxaldehydes and 1,4-cyclohexanedicarboxaldehydes, preferably a 1-to-1 mixture thereof; exo,exo-2,5-norbornanedicarboxaldehyde; exo, exo-2,6-norbornanedicarboxaldehyde; exo,endo-2,5-norbornanedicarboxaldehyde; exo, endo-2,6-norbornanedicarboxaldehyde; endo,endo-2,5-norbornanedicarboxaldehyde; endo, endo-2,6-norbornanedicarboxaldehyde product (endo and exo mixture); 3-(3-formylcyclohexyl)propanal; 3-(4-formylcyclohexyl)propanal; 2-(3-formylcyclohexyl)propanal; 2-(4-formylcyclohexyl)propanal; and cyclododecane-1,4,8-tricarbaldehyde and a mixture containing one or more of 2,8-, 3,8-, and 4,8-di(formyl)tricyclo[5.2.1.02'6]decane. The trans-1,3-cyclohexanedicarboxaldehyde; cis-1,3-cyclohexanedicarboxaldehyde; trans-1,4-cyclohexanedicarboxaldehyde; and cis-1,4-cyclohexanedicarboxaldehyde can be prepared by a process comprising hydroformylating 3-cyclohexene-1-carboxaldehyde using the hydroformylating conditions described later. The 1:1 mixture of 1,3- and 1,4-cyclohexanedicarboxaldehydes can be prepared by a process comprising reacting acrolein and 1,3-butadiene in a Diels-Alder reaction to give 3-cyclohexenecarboxaldehyde (also called 1,2,3,6-tetrahydrobenzaldehyde), and hydroformylating the 3-cyclohexenecarboxaldehyde. The exo,exo-2,5-norbomanedicarboxaldehyde; exo,exo-2,6-norbornanedicarboxaldehyde; exo,endo-2,5-norbornanedicarboxaldehyde; exo,endo-2,6-norbornanedicarboxaldehyde; endo,endo-2,5-norbornanedicarboxaldehyde; and endo,endo-2,6-norbornanedicarboxaldehyde product (endo and exo mixture) can be prepared by a process comprising reacting acrolein and cyclopentadiene in a Diels Alder reaction to give a 2-norbomene-5-carboxaldehyde, and hydroformylating the 2-norbomene-5-carboxaldehyde. The 3-(3-formylcyclohexyl)propanal; 3-(4-formylcyclohexyl)propanal; 2-(3-formylcyclohexyl)propanal; and 2-(4-formylcyclohexyl)propanal can be prepared by a process comprising hydroformylating vinyl cyclohexene. The cyclododecane-1,4,8-tricarboxaldehyde can be prepared by a process comprising trimerizing 1,3-butadiene to give 1,4,8-cyclododecatriene, and hydroformylating the 1,4,8-cyclododecatriene.

The polyaldehyde useful in the present invention can be unblocked and unprotected or blocked or protected. Blocked or protected polyaldehydes can be formed by reacting an unblocked and unprotected polyaldehyde with a suitable blocking or protecting group. Examples of protecting or blocking groups for aldehyde groups are bisulfites (e.g., from reaction of the polyaldehyde with sodium bisulfite), dioxolanes (e. g., from reaction of the polyaldehyde with ethylene glycol), oximes (e.g., from reaction of the polyaldehyde with hydroxylamine), imines (e.g., from reaction of the polyaldehyde with methylamine), and oxazolidines (e.g., from reaction of the polyaldehyde with a 2-aminoethanol).

Preferred aldehyde protecting groups are, and preferred protected polyaldehydes comprise, a hydrated group ( 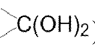 ), hemiacetal, acetal, or imine. These preferred protected polyaldehydes can be prepared by respectively reacting the polyaldehyde with water; one mole equivalent of an alkanol (e.g., methanol or ethanol); two mole equivalents of the alkanol; or ammonia or a primary amine (e.g., methylamine). The hemiacetal, acetal, or imine protecting group can, if desired, be removed by a deprotection such as hydrolysis to give back the unprotected form of the polyaldehyde. Such aldehyde protecting or blocking groups and formation and removal (i.e., deprotection) is taught, for example, in US. Pat. No. 6,177,514B1.

Preferably, the polyaldehyde is stable in neat form (i.e., does not materially self-polymerize) and, more preferably, is substantially water insoluble and is stable in neat form.

The polyaldehyde useful in the present invention can be prepared by any suitable means, including oxidation of corresponding polyols, and via batchwise and continuous processes for preparing the polyaldehydes. Preferably the polyaldehyde is prepared by hydroformylating a substantially water-insoluble mono-olefin containing aldehyde compound, substantially water-insoluble multi-olefin containing aldehyde compound, or a substantially water-insoluble multi-olefin containing starting compound (collectively referred to herein for convenience as substantially water-insoluble olefin-containing compounds). The hydroformylation step can be performed by any conventional means such as with hydrogen gas, carbon monoxide, and the olefin-containing starting compound. Preferably the hydroformylating step is performed in a manner as generally described in US. Pat. No.6,252,121 B1, which describes an improved separation process. Preparations of the polyaldehyde can optionally further comprise reversibly blocking or protecting aldehyde groups of the polyaldehydes with aldehyde blocking or protecting groups to give a blocked or protected polyaldehyde, respectively. The protected polyaldehyde can be employed in place of or in addition to the polyaldehyde component.

Preferably, the polyaldehyde is selected from the group consisting of (cis,trans)-1,4-cyclohexanedicarboxyaldehydes, (cis,trans)-1,3-cyclohexanedicarboxyaldehydes, pentane-1,5-dial, ethane-1,2-dial, and mixtures thereof. More preferably, the polyaldehyde is a mixture comprising two or more oftrans-1,3-cyclohexanedicarboxaldehyde, cis-1,3-cyclohexanedicarboxaldehyde, trans-1,4-cyclohexanedicarboxaldehyde and cis-1,4-cyclohexanedicarboxaldehyde, or protected or blocked forms of these polyaldehydes.

The crosslinkable composition of the present invention may comprise the polyaldehyde, the acetal or hemiacetal of the polyaldehydes or mixtures thereof in a combined amount of 3% or more, 5% or more, or even 7% or more, and at the same time, 25% or less, 22% or less, or even 19% or less, by weight based on the total dry weight of the crosslinkable composition.

The crosslinkable composition of the present invention may also comprise one or more acid catalysts. The curing step of the crosslinkable composition is initiated by the acid catalyst. Such initiation can be performed by exposure to heat for a period of time sufficient to produce the crosslinked composition. The heat can be applied radiantly although other means such as by convection or combinations of means can be used.

The acid catalyst useful in the present invention may have a pK*ₐ* of less than 6.0 at 25°C, wherein pK*ₐ* is negative base-10 logarithm of acid dissociation constant, K*ₐ*, of the acid catalyst. The pK*ₐ* of the acid catalyst may be less than 4.0 or less than 3.0 at 25°C. The experimental determination of pKa values may be performed by means of titrations, in a medium of high ionic strength (e.g., water) at constant temperature. Any acid suitable for increasing a rate of reaction of a carbamate group with an aldehyde group (-C(=O)H) can be employed as the acid catalyst. Examples of acid catalysts are Lewis acids (e.g., boron trifluoride etherate) and protic acids (i.e., Bronsted acids). The acid catalyst can be a Lewis acid. The acid catalyst can comprise a protic acid.

A preferred protic acid is an inorganic protic acid or organic protic acid. A preferred inorganic protic acid is phosphoric acid or sulfuric acid. A preferred organic protic acid is carboxylic acid, phosphonic acid, or sulfonic acid. A preferred carboxylic acid is acetic acid, trifluoroacetic acid, propionic acid, or a dicarboxylic acid. A preferred phosphonic acid is methylphosphonic acid. A preferred sulfonic acid is methanesulfonic acid, benzenesulfonic acid, a camphorsulfonic acid; para-toluenesulfonic acid, or dodecylbenzene sulfonic acid. Examples of suitable Lewis acid curing catalysts are AlCl₃; benzyltriethylammonium chloride (TEBAC); Cu(O₃SCF₃)₂; (CH₃)₂BrS⁺Br⁻; FeCl₃ (e.g., FeCl₃.6H₂O); HBF₄; BF₃.O(CH₂CH₃)₂; TiCl₄; SnCl₄; CrCl₂; NiCl₂; and Pd(OC(O)CH₃)₂.

The acid catalyst can be unsupported (no solid support) or supported, i.e. covalently bonded to a solid support. Examples of supported acid catalysts are supported curing catalysts such as acid (H⁺) forms of cation exchange-type polymer resins (e.g., ethane sulfonic acid, 2-[1-[difluoro[(1,2,2-trifluoroethenyl)oxy]methyl]-1,2,2,2-tetrafluoroethoxy]-1,1,2,2-tetrafluoro-, polymer with 1,1,2,2-tetrafluoroethene, available under the trade name NAFION NR 50 (E. I. du Pont de Nemours & Co., Inc., Wilmington, Del.) and ethenylbenzenesulfonic acid polymer with diethenylbenzene available under the trade name AMBERLYST™ 15 (Rohm and Haas Co., subsidiary of The Dow Chemical Company, Midland, Mich., USA).

The acid catalyst in the crosslinkable composition may be present, by weight based on the total dry weight of the crosslinkable composition, in an amount of 0.3% or more, 0.5% or more, or even 0.7% or more, and at the same time, 5% or less, 4.5% or less, or even 4% or less.

The crosslinkable composition of the present invention further comprises one or more hindered phenols (antioxidants) which can vary in molecular weight and phenol functionality. A representative structure of a hindered phenol is provided below. 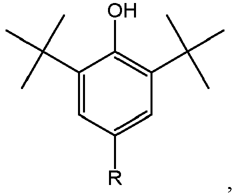 wherein R is an organic group-containing substituent with a molecular weight of 95 or more selected from the group consisting of a hydroxyl group, amide group, ester group, ether group, hydrazide group, and sulfide group.

The hindered phenol useful in the present invention has a molecular weight of 300 or more, 350 or more, 400 or more, 450 or more, or even 500 or more. The molecular weight may be determined by a High-Performance Liquid Chromatography (HPLC) instrument equipped with a suitable HPLC column and connected with a mass selection detector. The hindered phenol useful in the present invention may have a phenol functionality of one or more, two or more, or even three or more. Preferably, the hindered phenol is selected from 3-(3,5-ditert-butyl-4-hydroxyphenyl)-N'-[3-(3,5-ditert-butyl-4-hydroxyphenyl)propanoyl]propanehydrazide; pentaerythritol tetrakis(3-(3,5-di-tert-butyl-4-hydroxyphenyl)propionate); octadecyl-3-(3,5-di-tert-butyl-4-hydroxyphenyl)-propionate; ethylenebis(oxyethylene)bis-3,5-tert-butyl-4-hydroxy-m-tolyl)-propionate; 4-[[3,5-bis[(3,5-di-tert-butyl-4-hydroxyphenyl)methyl]-2,4,6-trimethylphenyl]methyl]-2,6-di-tert-butylphenol; 4,4-methylene-bis(3,5-di-tert-butylphenol); or mixtures thereof. More preferably, the hindered phenol is pentaerythritol tetrakis(3-(3,5-di-tert-butyl-4-hydroxyphenyl)propionate. Examples of preferred hindered phenol structures include, 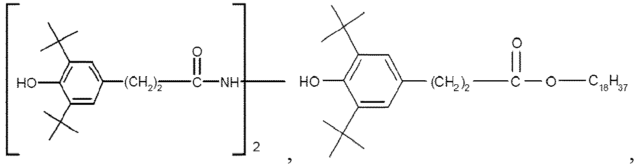 and 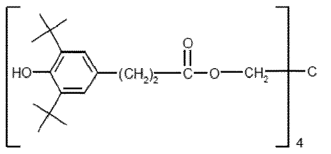 These preferred hindered phenols can be used alone or in mixtures with each other or with other anti-oxidant components known in the art.

The hindered phenol in the crosslinkable composition may be present in an amount 0.1% or more, 0.2% or more, 0.5% or more, or even 1% or more, and at the same time, 20% or less, 18% or less, 15% or less, or even 10% or less, by weight based on the total weight of the polyaldehyde, the acetal or hemiacetal of the polyaldehyde.

The crosslinkable composition of the present invention may optionally comprise one or more organic solvents. The organic solvents may be used for reducing the viscosity of the crosslinkable composition to facilitate application to a substrate. The organic solvents may also be used to maintain all the components of the crosslinkable coating composition in one single phase. Such solvents may be non-polar or polar organic solvents such as, for example, alkanes such as (C₆-C₁₂)alkanes; ethers such as (C₂-C₁₂)ethers or (C₂-C₁₂)dialkyl ethers); carboxylic esters such as (C₂-C₁₂)carboxylic esters; ketones such as (C₃-C₁₂)ketones; secondary or tertiary carboxamides such as secondary or tertiary (C₃-C₁₂)carboxamides; sulfoxides such as (C₂-C₁₂)sulfoxides; or mixtures thereof. Examples of suitable solvents include ethanol, ethylene glycol monoalkyl ethers, diethylene glycol monoalkyl ethers, propylene glycol monoalkyl ethers and dipropylene glycol monoalkyl ethers, or mixtures thereof. The solvent may be present in an amount of from 0 to 90% by weight, from 20% to 80% by weight, or from 40% to 70% by weight, based on the total weight of the crosslinkable composition.

To increase the pot-life of the composition, the crosslinkable composition of the present invention may further comprise one or more curing inhibitors. The curing inhibitor is volatilized from the composition under ambient cure conditions. Suitable curing inhibitors have a boiling point at atmospheric pressure of at most 300°C, at most 250°C, or at most 200°C. Preferably, the curing inhibitor is selected from one or more alcohols, such as, for example a primary or secondary alcohol, such as (C₁-C₁₂)alkanols. The curing inhibitor may be present in an amount of 0.5% or more, 1% or more, or even 2% or more, and at the same time, 90% or less, 60% or less, or even 50% or less, by weight based on the total weight of the crosslinkable composition.

The crosslinkable composition of the present invention may further comprise one or more pigments having a pH in the range of equal to or less than 9. Examples of pigments include TiO₂, lamp black, and talc, or mixtures thereof. The pigments may be present in an amount of from 0 to 60%, from 5% to 50%, or from 10% to 40%, by weight based on the total dry weight of the crosslinkable composition.

The crosslinkable composition of the present invention may comprise one or more fillers having a pH in the range of equal to or less than 9. Examples of fillers include clay, barium sulfate, silica, or mixtures thereof. The fillers may be present in an amount of from 0 to 50%, from 5% to 40%, or from 10% to 30%, by weight based on the total dry weight of the crosslinkable composition.

The crosslinkable composition of the present invention may also comprise one or more additives having a pH in the range of equal to or less than 9. Exemplary additives include ultraviolet (UV) light stabilizers, dispersing agents, flow and leveling agents and rheology agents. Such additional additives will depend on the intended use of the coating composition. Typically useful conventional formulation additives include hindered amine light stabilizers (photo antioxidants) such as Bis-(1-octyloxy-2,2,6,6-tetramethyl-4-piperidinyl) sebacate (TINUVIN™ 123 supplied by BASF) and 2,4-bis[N-Butyl-N-(1-cyclohexyloxy-2,2,6,6 tetramethylpiperidin-4-yl)amino]-6-(2-hydroxyethylamine)-1,3,5-triazine (TINUVIN 152 supplied by BASF); pigment and filler dispersing additives such as polyphosphoric acid polyesters (DISPERBYK™ 110 supplied by BYK USA, Inc); and flow and leveling agents such as polyether modified poly dimethylsiloxanes (BYK™ 333 supplied by BYK USA, Inc); and rheology modifiers such as organowaxes (TROYTHIX™ XYZ supplied by Troy Corporation). These additives may be present in an amount without compromising the drying property of the crosslinkable composition, and hardness and odor performance of the obtained crosslinked composition. For example, these additives may be present in an amount of from 0 to 5%, from 0.5% to 4%, or from 1% to 3%, by weight based on the total dry weight of the crosslinkable composition.

Preferably, the crosslinkable composition of the present invention comprises:
(a) the polycarbamate having an average of 2 or more functional groups;
(b) the polyaldehyde, the acetal or hemiacetal of the polyaldehyde, or mixtures thereof;
(c) the acid catalyst having a pKa of less than 6.0;
(d) the hindered phenol having a molecular weight of 300 or more; and
(e) optionally an organic solvent.

More preferably, the crosslinkable composition of the present invention comprises, based on the total dry weight of the crosslinkable composition,
(a) from 60% to 85% by weight of the polycarbamate having an average of 2 or more functional groups;
(b) from 7% to 19% by weight of the polyaldehyde, the acetal or hemiacetal of the polyaldehyde, or mixtures thereof;
(c) from 0.7% to 4% by weight of the acid catalyst having a pKa of less than 6.0;
(d) from 0.1% to 2% by weight of the hindered phenol having a molecular weight of 300 or more; and
(e) optionally the organic solvent.

Preparation of the crosslinkable composition of the present invention may be achieved by admixing (a) the polyol, the polycarbamate, or mixtures thereof; (b) the polyaldehyde, the acetal or hemiacetal of the polyaldehyde, or mixtures thereof; (c) the acid catalyst; and (d) the hindered phenol, preferably dissolved in the solvent. Other optional components including, for example, the solvent, the curing inhibitor and the additives as described above may be added. Components in the composition may be mixed in any order to provide the crosslinkable composition of the present invention. Any of the above-mentioned optional components may also be added to the composition during the mixing or prior to the mixing to form the composition.

The crosslinkable composition of the present invention is capable of reacting to cure at a temperature of from 0°C to less than 80°C to form a crosslinked composition. The curing temperature of the crosslinkable composition can be 80°C or lower, 60°C or lower, 50°C or less, 40°C or lower, 35°C or lower, or even 30°C or lower; and at the same time, at least 0°C, at least 10°C, or at least 20°C. Preferably, the crosslinkable composition of the present invention is curable at ambient temperature. A preferred ambient temperature for curing is from 19°C to 29°C. In some embodiments, the crosslinkable composition comprising the component (a) selected from the polycarbamate and the component (b) selected from the polyaldehyde, the acetal or hemiacetal of the polyaldehyde, or mixtures thereof, can cure at ambient temperature.

Curing the crosslinkable composition may be conducted for a predetermined period of time which may be from minutes up to hours, depending on components in the composition and curing temperature applied. For example, the crosslinkable composition may be cured within a curing time period of 7 days or shorter, 5 days or shorter, 24 hours or shorter, 12 hours or shorter, or even 1 hour or shorter at ambient temperature.

The crosslinkable composition of the present invention provides a coating made therefrom with reduced odor compared to a conventional crosslinkable composition comprising the same components as the crosslinkable composition of the present invention except no specific hindered phenol described above. "Odor" of a coating is determined by a blind smell test for a coating with a thickness of 60±10 µm and an area of 60±10 cm² by curing a crosslinkable composition at 20-25°C for 7 days. "Reduced odor", "lower odor" or "reducing the odor of a coating" described later, means a coating after certain treatment (that is, the addition of the specific hindered phenol described above) has lower odor than a coating without such treatment, as measured by the odor test above.

In addition, as compared to the conventional crosslinkable composition, the crosslinkable composition of the composition also demonstrates comparable drying speed and provides the crosslinked composition obtained therefrom with comparable hardness. Pencil hardness of the crosslinked composition (i.e., crosslinked composition obtained by curing the crosslinkable composition), may be 2B or harder or B or harder, and may be 2H or softer or H or softer. Pendulum hardness of the crosslinked composition may be from 100 seconds to 170 seconds or from 120 seconds to 160 seconds. Pencil hardness and pendulum hardness are measured after curing a 120 µm thick wet film of the crosslinkable composition at room temperature (20-25°C) for 7 days, according to the test methods described in the Examples section.

A process of using the crosslinkable composition of the present invention may comprise: applying the crosslinkable composition to a substrate, and curing or allowing to cure the applied crosslinkable composition. The crosslinkable composition of the present invention upon curing forms a crosslinked composition.

The present invention also provides a coating comprising the crosslinked composition. The coating of the present invention has reduced odor compared to coatings made from the conventional crosslinkable composition described above. A process for producing the coating, comprising: (i) providing the crosslinkable composition described above, and (ii) curing the crosslinkable composition to form the coating. The coating can be formed by applying the crosslinkable composition of the present invention to a substrate by incumbent means including brushing, dipping, rolling, mopping, troweling, and spraying. The coating composition is preferably applied by spraying. The standard spray techniques and equipment for spraying such as air-atomized spray, air spray, airless spray, high volume low pressure spray, and electrostatic spray such as electrostatic bell application, and either manual or automatic methods can be used. The crosslinkable composition of the present invention can be applied to, coated to, adhered to, or sealed to, various substrates to form the coating. Examples of suitable substrates include wood, metals, plastics, foams, stones, elastomeric substrates, glass, fabrics, concrete, cementious substrates, or pre-coated substrates. The coating of the present invention includes various coating applications, such as marine and protective coatings, automotive coatings, wood coatings, general metal coatings, coil coatings, roof coatings, plastic coatings, powder coatings, can coatings, and civil engineering coatings, particularly wood coatings. The coating can be used alone, or in combination with other coatings to form multi-layer coatings.

The present invention also provides a method of reducing the odor of a coating, comprising:
(1) adding the hindered phenol having a molecular weight of 300 or more to a composition comprising the same components as the crosslinkable composition of the present invention except no hindered phenol as described above, i.e., a mixture of (a) the polyol, the polycarbamate, or mixtures thereof; having an average functional groups of 2 or more; (b) the polyaldehyde, acetal or hemiacetal of the polyaldehyde, or mixtures thereof; (c) the acid catalyst having a pKa of less than 6.0; and (e) optionally the organic solvent; thus to form a crosslinkable composition (i.e., the crosslinkable composition of the present invention); and
(2) curing the crosslinkable composition to form the coating.

The present invention also provides use of a hindered phenol having a molecular weight of 300 or more as an odor reducing agent in a conventional crosslinkable composition comprising a mixture of (a) the polyol, the polycarbamate, or mixtures thereof; (b) the polyaldehyde, acetal or hemiacetal of the polyaldehyde, or mixtures thereof; (c) the acid catalyst having a pKa of less than 6.0; and (e) optionally the organic solvent. The use of the present invention comprises: adding the hindered phenol into the conventional crosslinkable composition. The dosage of the hindered phenol is the same as the concentration of the hindered phenol in the crosslinkable composition of the present invention described above.

### EXAMPLES

The following examples illustrate embodiments of the present invention. All parts and percentages in the examples are by weight unless otherwise indicated. The following materials are used in the examples:
IRGANOX 1010, available from BASF, is a hindered phenol with a molecular weight (MW) of 1178 g/mol.
IRGANOX MD 1024, available from BASF, is a hindered phenol with a molecular weight (MW) of 553 g/mol.
Butylated hydroxyanisole ("BHA"), available from Sigma Aldrich, is a hindered phenol with a molecular weight (MW) of 180 g/mol.
Propyl gallate, available from Sigma Aldrich, is a hindered phenol with a molecular weight (MW) of 212 g/mol.
TINUVIN 123 and TINUVIN 5100, both available from BASF, are hindered amine light stabilizers ("HALS").
PARALOID EDGE 2595 resin, available from The Dow Chemical Company, is a solventborne, acrylic polycarbamate polymer having a T_{g} of 59°C.
PARALOID EDGE 1315 resin, available from The Dow Chemical Company, is a solventborne, alkyd polycarbamate polymer having a T_{g} of 31°C.
PARALOID EDGE XL-195, available from The Dow Chemical Company, is a mixture of 1,3 & 1,4-cyclohexanedicarboxaldehyde ("CHDA") .
n-butyl acetate ("BA"), ethanol and isopropanol ("IPA") are all available from Sinopharm and used as solvents.
p-toluene sufonic acid ("p-TSA"), available from Sinopharm, is used as a catalyst.

The following standard analytical equipment and methods are used in the Examples.

### T_{g} of polycarbamate polymer

T_{g} values were measured using a DSC1000 from TA Instruments. Between 7-14 mg of dried polymer was weighed into a DSC pan. The pan was heated from room temperature to 150°C at 10° C/min and then cooled to room temperature at 10° C/min. The pan was heated again to 150°C at 10°C/min and T_{g} value was determined in this run.

### Odor Test

A crosslinkable composition was first applied to a substrate, and then cured at 20-25°C for 7 days to form a coating with a thickness of 60±10 µm and an area of 60±10 cm². The odor panelists were given "blind" samples of each coating and then smell the coating. The panelists rated each coating from 1 to 5, where 1 means no odor, 2 means slight odor, 3 means neutral odor, 4 means unfavorable odor, and 5 means very unpleasant odor.

### Drying Property

A BYK drying timer was used to record the tack-free time of a crosslinkable composition according to the ASTM D 5895-03 method. The crosslinkable composition to be evaluated was coated on a glass panel with a wet film thickness of 150 µm, and then the coated glass panel was put on to the BYK drying timer for drying at ambient temperature.

### Pencil Hardness

The pencil hardness of a coating film was measured according to the ASTM D3363-05 method. A coating composition was applied on a glass panel to form a 120 µm thick wet film and cured at room temperature for 7 days. The resultant film was then tested by a Zhonghua pencil. The hardness of the pencil used is: 9H, 8H, 7H, 6H, 5H, 4H, 3H, 2H, H, F, HB, B, 2B, 3B, 4B, 5B, 6B, where 9H is the hardest, 6B is the softest.

### Pendulum Hardness

A crosslinkable composition to be tested was applied on a glass panel to form a 120 µm thick wet film and cured at room temperature. The pendulum hardness of the film after curing for 4 days, 5 days, 6 days and 7 days, respectively, was tested according to the ASTM D4366-14 method, and 3 measurements were averaged and reported.

### Example (Ex) 1

Polycarbamate was charged into a speed mixer cup, and mixed approximately 60-120 seconds at 3,000 rpm or until mixed well. n-butyl acetate was added and mixed another 60 seconds at 3,000 rpm. These raw materials were further mixed 60 seconds at 3,000 rpm again. Ethanol and p-TSA were added, and mixed for 60 seconds at 3,000 rpm. The sides of the cup were scraped, and a hindered phenol antioxidant and CHDA were added and mixed for 30 seconds at 3,000 rpm to obtain the composition of Ex 1.

### Ex 2 and Comparative (Comp) Exs A-E

Compositions of Ex 2 and Comp Exs A-E were prepared according to the same procedure as described above for preparing the composition of Ex 1, based on formulations described in Table 1. No antioxidant was used in Comp Ex A.

**Table 1**

| | Comp Ex A | Ex 1 | Ex 2 | Comp Ex B | Comp Ex C | Comp Ex D | Comp Ex E |
|---|---|---|---|---|---|---|---|
| Part A | | | | | | | |
| PARALOID EDGE 2595 (g) | 50.00 | 50.00 | 50.00 | 50.00 | 50.00 | 50.00 | 50.00 |
| n-butyl acetate (g) | 8.80 | 8.80 | 8.80 | 8.80 | 8.80 | 8.80 | 8.80 |
| Ethanol (g) | 33.00 | 33.00 | 33.00 | 33.00 | 33.00 | 33.00 | 33.00 |
| p-TSA (40% in IPA) (g) | 2.00 | 2.00 | 2.00 | 2.00 | 2.00 | 2.00 | 2.00 |

| Part B | | | | | | | |
|---|---|---|---|---|---|---|---|
| CHDA (g) | 6.20 | 6.20 | 6.20 | 6.20 | 6.20 | 6.20 | 6.20 |
| Antioxidant in BA (10%) (g) | 0.00 | 0.31 | 0.31 | 0.31 | 0.31 | 0.31 | 0.31 |
| Antioxidant | NA | IRGANOX MD 1024 (Hindered phenol) | IRGANOX 1010 (Hindered phenol) | BHA (Hindered phenol) | Propyl gallate (Hindered phenol) | TINUVIN 123 (HALS) | TINUVIN 5100 (HALS) |

The obtained compositions were tested according to the odor test method described above and the odor test results are listed in Table 2. The odor test results were further analyzed using Student's t-Test to get mean and standard deviation (Std Dev) for each coating sample, and to determine if there is a significant difference between coatings. The analysis is given in Table 3. As seen from Table 3, the average odor rating (i.e., mean) for coatings made from the compositions of Exs 1 and 2 were about 2.1 and about 1.9, respectively. In contrast, coatings made from the compositions of Comp Exs A-E demonstrated an odor rating of about 2.7 or even higher. In the analysis of Student's t-Test, the odor profile difference between group 1 (Exs 1 and 2) and group 2 (Comp Exs A-E) was significant at 95% level of confidence. The results indicate that the inventive coatings showed reduced odor compared to the comparative coatings.

**Table 2**

| Odor Panelist Number | Comp Ex A | Ex 1 | Ex 2 | Comp Ex B | Comp Ex C | Comp Ex D | Comp Ex E |
|---|---|---|---|---|---|---|---|
| 1 | 4 | 2 | 2 | 2 | 3 | 5 | 4 |
| 2 | 4 | 2 | 2 | 3 | 3 | 4 | 5 |
| 3 | 3 | 2 | 1 | 3 | 2 | 4 | 4 |
| 4 | 3 | 3 | 2 | 4 | 2 | 2 | 2 |
| 5 | 3 | 3 | 2 | 3 | 3 | 3 | 4 |
| 6 | 3 | 2 | 2 | 4 | 5 | 5 | 3 |
| 7 | 3 | 2 | 2 | 3 | 3 | 3 | 2 |
| 8 | 4 | 1 | 1 | 2 | 2 | 2 | 3 |
| 9 | 2 | 1 | 2 | 2 | 2 | 3 | 3 |
| 10 | 2 | 2 | 2 | 2 | 2 | 4 | 3 |
| 11 | 3 | 3 | 2 | 2 | 2 | 3 | 3 |
| 12 | 3 | 1 | 2 | 2 | 2 | 2 | 3 |
| 13 | 3 | 2 | 3 | 2 | 4 | 2 | 3 |
| 14 | 5 | 4 | 2 | 3 | 3 | 4 | 4 |

**Table 3**

| | Antioxidant | Number of Panelists | Mean | Std Dev | Std Error Mean | Lower 95% | Upper 95% |
|---|---|---|---|---|---|---|---|
| Comp Ex B | BHA | 14 | 2.64286 | 0.74495 | 0.1991 | 2.2127 | 3.073 |
| Ex 2 | IRGANOX 1010 | 14 | 1.92857 | 0.47463 | 0.12685 | 1.6545 | 2.2026 |
| Ex 1 | IRGANOX MD 1024 | 14 | 2.14286 | 0.86444 | 0.23103 | 1.6437 | 2.642 |
| Comp Ex C | Propyl gallate | 14 | 2.71429 | 0.91387 | 0.24424 | 2.1866 | 3.2419 |
| Comp Ex D | TINUVIN 123 | 14 | 3.28571 | 1.06904 | 0.28571 | 2.6685 | 3.903 |
| Comp Ex E | TINUVIN 5100 | 14 | 3.28571 | 0.82542 | 0.2206 | 2.8091 | 3.7623 |
| Comp Ex A | w/o | 14 | 3.21429 | 0.80178 | 0.21429 | 2.7513 | 3.6772 |

### Exs 3-7 and Comp Ex F

Compositions of Exs 3-7 and Comp Ex F were prepared according to the same procedure as described above for preparing the composition of Ex 1, based on formulations described in Table 4. No antioxidant was used in Comp Ex F. Drying properties of the obtained compositions and hardness of the coatings made therefrom were measured according to the test methods described above.

As shown in Table 4, compared to that of Comp Ex F, the compositions of Exs 3-7 showed comparable drying speed and also provided coatings with comparable pencil hardness and pendulum hardness.

**Table 4**

| | Comp Ex F | Ex 3 | Ex 4 | Ex 5 | Ex 6 | Ex 7 |
|---|---|---|---|---|---|---|
| PARALOID EDGE 1315 (g) | 47.50 | 47.50 | 47.50 | 47.50 | 47.50 | 47.50 |
| n-butyl acetate (g) | 11.30 | 11.30 | 11.30 | 11.30 | 11.30 | 11.30 |
| Ethanol(g) | 28.00 | 28.00 | 28.00 | 28.00 | 28.00 | 28.00 |
| p-TSA (40% in IPA) (g) | 2.00 | 2.00 | 2.00 | 2.00 | 2.00 | 2.00 |

| Part B | | | | | | |
|---|---|---|---|---|---|---|
| PARALOID EDGE XL-195 (g) | 6.20 | 6.20 | 6.20 | 6.20 | 6.20 | 6.20 |
| IRGANOX 1010 in BA (20%) (g) | 0.00 | 0.38 | 0.78 | 1.55 | 2.33 | 3.10 |
| Ethanol (g) | 5.00 | 4.62 | 4.22 | 3.45 | 2.68 | 1.90 |
| Total | 100.00 | 100.00 | 100.00 | 100.00 | 100.00 | 100.00 |

| Pendulum Hardness (seconds) | | | | | | |
|---|---|---|---|---|---|---|
| 4 day | 148 | 148 | 148 | 134 | 145 | 147 |
| 5 day | 147 | 146 | 146 | 146 | 148 | 146 |
| 6 day | 150 | 144 | 147 | 149 | 149 | 143 |
| 7 day | 147 | 141 | 147 | 146 | 148 | 144 |
| Pencil Hardness (7 days) | B | B | B | B | B | B |

| Drying Properties (minutes) | | | | | | |
|---|---|---|---|---|---|---|
| Leveling | 0 | 0 | 0 | 0 | 0 | 0 |
| Basic Trace | 10 | 9 | 10 | 9 | 9 | 7 |
| Ripped Film | 19 | 20 | 18 | 23 | 15 | 14 |
| Surface Trace | 29 | 29 | 32 | 37 | 27 | 19 |

## Claims

1. A crosslinkable composition comprising:
(a) a polyol, a polycarbamate, or mixtures thereof; having an average of 2 or more functional groups;
(b) a polyaldehyde, an acetal or hemiacetal of the polyaldehyde or mixtures thereof;
(c) an acid catalyst having a pKa of less than 6.0;
(d) a hindered phenol having a molecular weight of 300 or more; and
(e) optionally an organic solvent.

2. The crosslinkable composition of claim 1, wherein the molecular weight of the hindered phenol is 400 or more.

3. The crosslinkable composition of claim 1, wherein the hindered phenol is selected from 3 -(3,5 -ditert-butyl-4-hydroxyphenyl)-N' -[3-(3,5-ditert-butyl-4-hydroxyphenyl)propanoyl]propanehydrazide; pentaerythritol tetrakis(3-(3,5-di-tert-butyl-4-hydroxyphenyl)propionate); octadecyl-3-(3,5-di-tert-butyl-4-hydroxyphenyl)-propionate; ethylenebis(oxyethylene)bis-3,5-tert-butyl-4-hydroxy-m-tolyl)-propionate; 4-[[3,5-bis[(3,5-di-tert-butyl-4-hydroxyphenyl)methyl]-2,4,6-trimethylphenyl]methyl]-2,6-di-tertbutylphenol; 4,4-methylene-bis(3,5-di-tert-butylphenol); or mixtures thereof.

4. The crosslinkable composition of claim 1, wherein the hindered phenol is present in an amount of from 0.2% to 20% by weight, based on the total weight of the polyaldehyde, and the acetal or hemiacetal of the polyaldehyde.

5. The crosslinkable composition of any one of claims 1-4, wherein the polyol or polycarbamate is an acrylic, styrene-acrylic, styrene-butadiene, saturated polyester, urethane, alkyd, polyether or polycarbonate.

6. The crosslinkable composition of any one of claims 1-4, wherein the polyaldehyde has from 2 to 20 carbon atoms.

7. The crosslinkable composition of any one of claims 1-4, wherein the polyaldehyde has greater than 20 carbon atoms, with the proviso that a polyaldehyde having greater than 20 carbon atoms has at least one aldehyde group for at least every 10 carbon atoms.

8. The crosslinkable composition of any one of claims 1-4, wherein the polyaldehyde is selected from the group consisting of (cis,trans)-1,4-cyclohexanedicarboxyaldehydes, (cis,trans)-1,3-cyclohexanedicarboxyaldehydes, pentane-1,5-dial, ethane-1,2-dial, and mixtures thereof.

9. The crosslinkable composition of any one of claims 1-4, wherein the acid catalyst has a pKa of less than 3.0.

10. The crosslinkable composition of any one of claims 1-4, wherein the acid catalyst is a Lewis acid.

11. The crosslinkable composition of any one of claims 1-4 further comprising a curing inhibitor comprising an alcohol.

12. The crosslinkable composition of claim 1, comprising:
(a) the polycarbamate having an average of 2 or more functional groups;
(b) the polyaldehyde, the acetal or hemiacetal of the polyaldehyde, or mixtures thereof;
(c) the acid catalyst having a pKa of less than 6.0;
(d) the hindered phenol having a molecular weight of 300 or more; and
(e) optionally the organic solvent.

13. A coating comprising the crosslinked composition of any one of claims 1-12.

14. A process for producing a coating, comprising:
(i) providing a crosslinkable composition of any one of claims 1-12; and
(ii) curing the crosslinkable composition to form the coating.

15. A method of reducing the odor of a coating, comprising:
(1) adding a hindered phenol having a molecular weight of 300 or more to a mixture of (a) a polyol, a polycarbamate, or mixtures thereof; having an average functional groups of 2 or more; (b) a polyaldehyde, an acetal or hemiacetal of the polyaldehyde or mixtures thereof; (c) an acid catalyst having a pKa of less than 6.0; and (e) optionally an organic solvent; thus to form a crosslinkable composition; and
(2) curing the crosslinkable composition to form the coating.

## Patentansprüche

1. Eine vernetzbare Zusammensetzung, die Folgendes beinhaltet:
(a) ein Polyol, ein Polycarbamat oder Mischungen davon; mit durchschnittlich 2 oder mehr funktionellen Gruppen;
(b) ein Polyaldehyd, ein Acetal oder Hemiacetal des Polyaldehyds oder Mischungen davon;
(c) einen Säurekatalysator mit einem pKa-Wert von weniger als 6,0;
(d) ein gehindertes Phenol mit einem Molekulargewicht von 300 oder mehr; und
(e) optional ein organisches Lösungsmittel.

2. Vernetzbare Zusammensetzung gemäß Anspruch 1, wobei das Molekulargewicht des gehinderten Phenols 400 oder mehr beträgt.

3. Vernetzbare Zusammensetzung gemäß Anspruch 1, wobei das gehinderte Phenol ausgewählt ist aus 3-(3,5-Ditert-butyl-4-hydroxyphenyl)-N'-[3-(3,5-ditert-butyl-4-hydroxyphenyl)propanoyl]propanhydrazid; Pentaerythritoltetrakis(3-(3,5-di-tert-butyl-4-hydroxyphenyl)propionat); Octadecyl-3-(3,5-di-tert-butyl-4-hydroxyphenyl)-propionat; Ethylenbis(oxyethylen)bis-3,5-tert-butyl-4-hydroxy-m-tolyl)-propionat; 4-[[3,5-Bis[(3,5-di-tert-butyl-4-hydroxyphenyl)methyl]-2,4,6-trimethylphenyl]methyl]-2,6-di-tert-butylphenol; 4,4-Methylen-bis(3,5-di-tert-butylphenol); oder Mischungen davon.

4. Vernetzbare Zusammensetzung gemäß Anspruch 1, wobei das gehinderte Phenol in einer Menge von 0,2 Gew.-% bis 20 Gew.-%, bezogen auf das Gesamtgewicht des Polyaldehyds und des Acetals oder Hemicetals des Polyaldehyds vorhanden ist.

5. Vernetzbare Zusammensetzung gemäß einem der Ansprüche 1-4, wobei das Polyol oder Polycarbamat ein Acryl, Styrolacryl, Styrolbutadien, gesättigter Polyester, Urethan, Alkyd, Polyether oder Polycarbonat ist.

6. Vernetzbare Zusammensetzung gemäß einem der Ansprüche 1-4, wobei das Polyaldehyd von 2 bis 20 Kohlenstoffatome aufweist.

7. Vernetzbare Zusammensetzung gemäß einem der Ansprüche 1-4, wobei das Polyaldehyd mehr als 20 Kohlenstoffatome aufweist, mit der Maßgabe, dass ein Polyaldehyd mit mehr als 20 Kohlenstoffatomen auf jeweils mindestens 10 Kohlenstoffatome eine Aldehydgruppe aufweist.

8. Vernetzbare Zusammensetzung gemäß einem der Ansprüche 1-4, wobei das Polyaldehyd aus der Gruppe ausgewählt ist, bestehend aus (cis, trans)-1,4-Cyclohexandicarboxyaldehyden, (cis,trans)-1,3-Cyclohexandicarboxyaldehyden, Pentan-1,5-dial, Ethan-1,2-dial und Mischungen davon.

9. Vernetzbare Zusammensetzung gemäß einem der Ansprüche 1-4, wobei der Säurekatalysator einen pKa-Wert von weniger als 3,0 aufweist.

10. Vernetzbare Zusammensetzung gemäß einem der Ansprüche 1-4, wobei der Säurekatalysator eine Lewis-Säure ist.

11. Vernetzbare Zusammensetzung gemäß einem der Ansprüche 1-4, die ferner einen Härteinhibitor beinhaltet, der einen Alkohol beinhaltet.

12. Vernetzbare Zusammensetzung gemäß Anspruch 1, die Folgendes beinhaltet:
(a) ein Polycarbamat mit durchschnittlich 2 oder mehr funktionellen Gruppen;
(b) das Polyaldehyd, das Acetal oder Hemiacetal des Polyaldehyds oder Mischungen davon;
(c) den Säurekatalysator mit einem pKa-Wert von weniger als 6,0;
(d) das gehinderte Phenol mit einem Molekulargewicht von 300 oder mehr; und
(e) optional das organische Lösungsmittel.

13. Eine Beschichtung, die die vernetzbare Zusammensetzung gemäß einem der Ansprüche 1-12 beinhaltet.

14. Ein Prozess zum Herstellen einer Beschichtung, der Folgendes beinhaltet:
(i) Bereitstellen einer vernetzbaren Zusammensetzung gemäß einem der Ansprüche 1-12; und
(ii) Härten der vernetzbaren Zusammensetzung, um die Beschichtung zu bilden.

15. Ein Verfahren zum Verringern des Geruchs einer Beschichtung, das Folgendes beinhaltet:
(1) Hinzufügen eines gehinderten Phenols mit einem Molekulargewicht von 300 oder mehr zu einer Mischung aus Folgendem: (a) einem Polyol, einem Polycarbamat oder Mischungen davon; mit durchschnittlich 2 oder mehr funktionellen Gruppen; (b) einem Polyaldehyd, einem Acetal oder Hemiacetal des Polyaldehyds oder Mischungen davon; (c) einem Säurekatalysator mit einem pKa-Wert von weniger als 6,0; und (e) optional einem organischen Lösungsmittel; um so eine vernetzbare Zusammensetzung zu bilden; und
(2) Härten der vernetzbaren Zusammensetzung, um die Beschichtung zu bilden.

## Revendications

1. Une composition réticulable comprenant :
(a) un polyol, un polycarbamate, ou des mélanges de ceux-ci ; ayant une moyenne de 2 groupes fonctionnels ou plus ;
(b) un polyaldéhyde, un acétal ou hémiacétal du polyaldéhyde ou des mélanges de ceux-ci ;
(c) un catalyseur acide ayant un pKa de moins de 6,0 ;
(d) un phénol encombré ayant une masse moléculaire de 300 ou plus ; et
(e) facultativement un solvant organique.

2. La composition réticulable de la revendication 1, dans laquelle la masse moléculaire du phénol encombré est de 400 ou plus.

3. La composition réticulable de la revendication 1, dans laquelle le phénol encombré est sélectionné parmi le 3-(3,5-ditert-butyl-4-hydroxyphényl)-N'-[3-(3,5-ditert-butyl-4-hydroxyphényl)propanoyl]propanehydrazide ; le pentaérythritol tétrakis(3-(3,5-di-tert-butyl-4-hydroxyphényl)propionate) ; l'octadécyl-3-(3,5-di-tert-butyl-4-hydroxyphényl)-propionate ; l'éthylènebis(oxyéthylène)bis-3,5-tert-butyl-4-hydroxy-m-tolyl)-propionate ; le 4-|[3,5-bis[(3,5-di-tert-butyl-4-hydroxyphényl)méthyl]-2,4,6-triméthylphényl]méthyl]-2,6-di-tert-butylphenol ; le 4,4-méthylène-bis(3,5-di-tert-butylphénol) ; ou des mélanges de ceux-ci.

4. La composition réticulable de la revendication 1, dans laquelle le phénol encombré est présent en une quantité allant de 0,2 % à 20 % en poids, rapporté au poids total du polyaldéhyde, et de l'acétal ou hémiacétal du polyaldéhyde.

5. La composition réticulable de n'importe laquelle des revendications 1 à 4, dans laquelle le polyol ou polycarbamate est un acrylique, un styrène-acrylique, un styrène-butadiène, un polyester saturé, un uréthane, un alkyde, un polyéther ou un polycarbonate.

6. La composition réticulable de n'importe laquelle des revendications 1 à 4, dans laquelle le polyaldéhyde a de 2 à 20 atomes de carbone.

7. La composition réticulable de n'importe laquelle des revendications 1 à 4, dans laquelle le polyaldéhyde a plus de 20 atomes de carbone, à la condition qu'un polyaldéhyde ayant plus de 20 atomes de carbone ait au moins un groupe aldéhyde pour au moins tous les 10 atomes de carbone.

8. La composition réticulable de n'importe laquelle des revendications 1 à 4, dans laquelle le polyaldéhyde est sélectionné dans le groupe constitué de (cis,trans)-1,4-cyclohexanedicarboxyaldéhydes, de (cis,trans)-1,3-cyclohexanedicarboxyaldéhydes, de pentane-1,5-dial, d'éthane-1,2-dial, et de mélanges de ceux-ci.

9. La composition réticulable de n'importe laquelle des revendications 1 à 4, dans laquelle le catalyseur acide a un pKa de moins de 3,0.

10. La composition réticulable de n'importe laquelle des revendications 1 à 4, dans laquelle le catalyseur acide est un acide de Lewis.

11. La composition réticulable de n'importe laquelle des revendications 1 à 4 comprenant en outre un inhibiteur de durcissement comprenant un alcool.

12. La composition réticulable de la revendication 1, comprenant :
(a) le polycarbamate ayant une moyenne de 2 groupes fonctionnels ou plus ;
(b) le polyaldéhyde, l'acétal ou hémiacétal du polyaldéhyde, ou des mélanges de ceux-ci ;
(c) le catalyseur acide ayant un pKa de moins de 6,0 ;
(d) le phénol encombré ayant une masse moléculaire de 300 ou plus ; et
(e) facultativement le solvant organique.

13. Un revêtement comprenant la composition réticulée de n'importe laquelle des revendications 1 à 12.

14. Un procédé pour produire un revêtement, comprenant :
(i) le fait de fournir une composition réticulable de n'importe laquelle des revendications 1 à 12 ; et
(ii) le fait de faire durcir la composition réticulable afin de former le revêtement.

15. Un procédé de réduction de l'odeur d'un revêtement, comprenant :
(1) le fait d'ajouter un phénol encombré ayant une masse moléculaire de 300 ou plus à un mélange de (a) un polyol, un polycarbamate, ou des mélanges de ceux-ci ; ayant une moyenne de 2 groupes fonctionnels ou plus ; (b) un polyaldéhyde, un acétal ou hémiacétal du polyaldéhyde ou des mélanges de ceux-ci ; (c) un catalyseur acide ayant un pKa de moins de 6,0 ; et (e) facultativement un solvant organique ; afin de former ainsi une composition réticulable ; et
(2) le fait de faire durcir la composition réticulable afin de former le revêtement.
